# EUROPÄISCHE PATENTSCHRIFT

(11) **EP 4 209 122 B1**
(45) Veröffentlichungstag und Bekanntmachung des Hinweises auf die Patenterteilung: **07.05.2025**
(21) Anmeldenummer: 23150268.3
(22) Anmeldetag: 04.01.2023
(51) Int. Cl.: A01C 11/02, A01C 5/04

(54) **PFLANZMASCHINE SOWIE VERFAHREN ZUM SETZEN EINER PFLANZE**
PLANTING MACHINE AND METHOD FOR PLACING A PLANT
PLANTEUSE ET PROCÉDÉ DE PLACEMENT D'UNE PLANTE

(30) Priorität: 05.01.2022 DE 102022100198
(43) Veröffentlichungstag der Anmeldung: 12.07.2023
(73) Patentinhaber: Heuling Maschinenbau Gmbh & Co. KG, 33829 Borgholzhausen (DE)
(72) Erfinder: Schulze Heuling, Raphael, 48231 Warendorf (DE); Schulze Heuling, Ulrich, 48231 Warendorf (DE)
(74) Vertreter: Pellengahr, Maximilian Rudolf

(56) Entgegenhaltungen:
- EP-B1- 3 082 394
- CH-A5- 572 302
- FR-A1- 2 498 045
- JP-A- 2021 136 866

## Beschreibung

Die Erfindung betrifft eine Pflanzmaschine zum Pflanzen wurzelnackter Pflanzen in ein Erdreich gemäß dem Anspruch 1. Das Erdreich kann mit einer Abdeckung, insbesondere einer Folie, abgedeckt sein. Außerdem betrifft die Erfindung ein Verfahren gemäß Anspruch 9 zum Setzen einer Pflanze mittels einer Pflanzmaschine.

### Stand der Technik

Pflanzen werden üblicherweise von Hand gesetzt, das heißt in Erdreich eingepflanzt. Beispielsweise im Sonderkulturbereich werden vor allem Erdbeeren auf von Erdreich gebildeten Dämmen angebaut, wobei diese in der Regel mit einer wasserdichten Abdeckung, üblicherweise einer Folie, abgedeckt sind. Um die Pflanzen trotz der Abdeckung durch die Folie gezielt mit Wasser und Nährstoffen versorgen zu können, ist üblicherweise unter der Folie mindestens ein Versorgungsschlauch zur Tröpfchenbewässerung verlegt.

Zur Erleichterung dieser auch als Setzen bezeichneten Arbeit und zur Erreichung eines gleichmäßigen Pflanzabstandes werden teilweise vorgelochte Folien verwendet, die auf dem Erdreich liegen und somit eine Pflanzposition vorgeben, an der die Pflanze gesetzt wird. Auch ist die Verwendung einer Vorrichtung bekannt, mittels der Löcher durch die Folie ins Erdreich stechbar sind und die dadurch Pflanzpositionen vorgibt, an denen die Pflanzen gesetzt werden sollen.

Dabei wird beziehungsweise werden je nach Ausführung der Vorrichtung gleichzeitig zu dem Stechen eines jeweiligen Lochs Wasser und/oder sonstige Mittel in die Löcher gegeben, um das Anwachsen der Pflanzen zu beschleunigen. Bei den Mitteln kann es sich insbesondere um eine Nährstofflösung und/oder ein Beizmittel handeln. Nach dem Stechen der Löcher erfolgt das Setzen der Pflanzen mit der Hand bei gleichzeitigem Andrücken von Erde, um sofortigen Bodenkontakt der Wurzeln sicherzustellen. Die pflanzende Person kann dabei entweder auf einer an der Vorrichtung angebrachten Sitzgelegenheit sitzen oder aber zu Fuß über das Feld gehen.

Bei der beschriebenen Verfahrensweise hat es sich als problematisch herausgestellt, dass die Pflanztiefe, in die die Pflanzen von Hand gesetzt werden, ungleichmäßig ist, was wiederum zu einem ungleichmäßigen Bodenkontakt der gesetzten Pflanzen führt.

Alternativ zu einem händischen Setzen ist auch ein automatisiertes Setzen mittels entsprechender Vorrichtungen bekannt. Hierzu wird beispielsweise auf die deutsche Offenlegungsschrift DE 10 2020 206 738 A1 hingewiesen. Diese beschreibt eine Vorrichtung zum automatisierten Pflanzen von Schösslingen. Die Vorrichtung sieht vor, dass die Schösslinge mittels eines Greifarms aus einem Magazin gegriffen und in eine Zuführeinrichtung gegeben werden. Hierbei werden mit jeder Aktion des Greifarms mehrere nebeneinander angeordnete Schösslinge gegriffen und gemeinsam in die Zuführeinrichtung gesetzt, die für jeden Schössling einen eigenen Zuführkanal aufweist. Die Zuführkanäle sind derart geformt, dass sie sich zu einem unteren Ende hin zu einer dichten Packung auf einer Kreisfläche versammeln. Unterhalb der Zuführeinrichtung ist eine Pflanzeinheit vorgesehen, die die Schösslinge aus der Zuführeinrichtung nach und nach übernimmt und in das Erdreich einsetzt.

Hierzu werden die Schösslinge von oben in die Pflanzeinheit gegeben, die einen innenliegenden, hohlen Kanal aufweist. Der jeweilige Schössling fällt daraufhin durch den hohlen Kanal bis zu einem unteren Ende der Pflanzeinheit, an dem ein Pflanzmaul ausgebildet ist. Mit diesem nach unten spitz zulaufenden Pflanzmaul wird die Pflanzeinheit in das Erdreich getrieben, gegebenenfalls durch eine auf dem Erdreich liegende Abdeckung hindurch. Dort wird das Pflanzmaul geöffnet und der jeweilige Schössling freigesetzt. Die Pflanzeinheit wird daraufhin wieder angehoben und der Schössling im Erdreich belassen. Bei diesem Pflanzvorgang wird wie beschrieben das "Pflanzmaul" nach dem Eindringen in das Erdreich geöffnet, um den Schössling freizugeben. Dadurch wird Erdreich von der zu setzenden Pflanze weggedrückt, sodass der erforderliche Kontakt der Wurzeln mit dem umgebenden Erdreich nicht unmittelbar sichergestellt ist. Mit dieser Art Pflanzmaschinen können daher nur Pflanzen gesetzt werden, deren Wurzelmasse sich in einem Ballen von Erdreich oder geeignetem Substrat ausgebildet hat und zusammen mit diesem Ballen eingepflanzt wird. Für das Setzen wurzelnackter Pflanzen ist die Vorrichtung entsprechend nicht geeignet. Weitere Pflanzmaschinen sind offenbart in FR 2 498 045 A1 und JP 2021 136866 A.

### Aufgabe

Der vorliegenden Anmeldung liegt mithin die Aufgabe zugrunde, eine Pflanzmaschine bereitzustellen, die für das Setzen wurzelnackter Pflanzen geeignet ist.

### Lösung

Die zugrunde liegende Aufgabe wird erfindungsgemäß mittels einer Pflanzmaschine mit den Merkmalen des Anspruchs 1 gelöst. Vorteilhafte Ausgestaltungen ergeben sich aus den zugehörigen Unteransprüchen.

Erfindungsgemäß ist eine Pflanzmaschine zum Pflanzen wurzelnackter Pflanzen in ein Erdreich vorgesehen, umfassend einen Rahmen, der insbesondere ein Traggerüst der Pflanzmaschine darstellen kann, sowie eine Kupplung zur Befestigung des Rahmens an einem Zugfahrzeug. Mittels des Zugfahrzeugs ist die Pflanzmaschine entlang einer Pflanzstrecke bewegbar. Ferner umfasst die Pflanzmaschine einen Träger zur Befestigung einer Pflanzeinheit an dem Rahmen, eine Pflanzeinheit zum Setzen der Pflanzen in das Erdreich sowie einen Aktor zum Betrieb der Pflanzeinheit. Hierbei umfasst die Pflanzeinheit einen Pflanzspaten und einen Niederhalter. Außerdem ist der Aktor dazu geeignet, den Pflanzspaten und den Niederhalter unabhängig voneinander und/oder die Pflanzeinheit als Ganzes senkrecht zu einer Oberfläche des Erdreichs auf und ab zu bewegen. Bevorzugt ist der Aktor dazu geeignet, sowohl den Pflanzspaten und den Niederhalter unabhängig voneinander als auch gemeinsam, das heißt die Pflanzeinheit als Ganzes, zu bewegen. Weiterhin ist der Träger mit der daran befestigten Pflanzeinheit derart an dem Rahmen der Pflanzmaschine angeordnet, dass die Pflanzeinheit bei einem Betrieb der Pflanzmaschine oberhalb des Erdreichs positionierbar ist, sodass zumindest der Pflanzspaten infolge einer relativ zu dem Rahmen abwärts gerichteten Bewegung in das Erdreich eintauchen kann. Sofern das Erdreich von einer Abdeckung bedeckt ist, insbesondere von einer Folie, kann diese Abdeckung mit dem Eintauchen des Pflanzspatens in das Erdreich von dem Pflanzspaten durchstoßen werden. Der Niederhalter kann beispielsweise ein Niederhaltelement aufweisen, das zu geeignet ist, eine Pflanze in vertikale Richtung "niederzuhalten", das heißt insbesondere an einer aufwärts gerichteten Bewegung aus dem Erdreich heraus zu hindern.

Im Zuge eines Betriebs der Pflanzmaschine überfährt selbige die Pflanzstrecke, typischerweise infolge eines Antriebs durch ein Zugfahrzeug, beispielsweise einen Traktor. Die Pflanzmaschine ist dazu vorgesehen, an vorab definierten Pflanzpositionen die Pflanzen in das Erdreich einzupflanzen. Dazu können die Pflanzen beispielsweise vorab von Hand oder - in einer vorteilhaften Ausgestaltung der Pflanzmaschine - mittels einer Fördereinrichtung der Pflanzmaschine an den jeweiligen Pflanzpositionen oberhalb des Erdreichs positioniert oder auf dem Erdreich abgelegt worden sein. Bevorzugt werden die Pflanzen mittels der Fördereinrichtung unabhängig von der Pflanzeinheit an oder auf dem Erdreich positioniert. Hierzu kann die Fördereinrichtung beispielsweise ein Laufband umfassen, mittels dessen Pflanzen von einer Bevorratung auf bzw. zu dem Erdreich transportiert werden. Die auf dem Erdreich abgelegten oder mittels der Fördereinrichtung an oder auf dem Erdreich gehaltenen Pflanzen können sodann mittels der Pflanzeinheit in das Erdreich eingepflanzt werden.

In diesem Zusammenhang befindet sich die Pflanzeinheit zumindest im Wesentlichen oberhalb einer Pflanzposition, an der eine Pflanze eingesetzt werden soll. Mittels des Aktors wird die Pflanzeinheit derart betätigt, dass der Pflanzspaten zumindest im Wesentlichen senkrecht an der Pflanzposition in das Erdreich eintaucht, ggf. nach Durchstoßung einer auf dem Erdreich liegenden Abdeckung, insbesondere einer Folie. Hierbei ist vorgesehen, dass der Pflanzspaten derart auf die auf oder über dem Erdreich positionierte Pflanze und/oder deren Wurzeln drückt, dass insbesondere letztere gewissermaßen in das Erdreich / hineingezogen werden. Durch diesen Vorgang werden die nackten, das heißt nicht von Erdreich o.ä. umgebenen Wurzeln der Pflanzen in das den Pflanzspaten umgebende Erdreich gedrückt und mit diesem vermischt. Dadurch ist ein unmittelbarer Kontakt zu dem Feuchtigkeit speichernden Erdreich sichergestellt. Zeitgleich oder zeitlich versetzt (sowohl zeitlich davor als auch danach möglich) mit einem Einführen des Pflanzspatens mitsamt der Pflanze bzw. deren Wurzeln in das Erdreich wird der Niederhalter abwärts bewegt. Der Niederhalter wird zumindest so weit abwärts bewegt, bis er ein Oberteil der Pflanze erreicht, das heißt mit diesem in Kontakt tritt. In diesem Zusammenhang kann der Niederhalter beispielsweise zumindest zeitweise gleichzeitig mit dem Pflanzspaten abwärts bewegt werden. Außerdem ist denkbar, dass der Niederhalter erst dann abwärts bewegt wird, wenn der Pflanzspaten nicht mehr bewegt wird. Der Niederhalter und der Pflanzspaten sind somit grundsätzlich unabhängig voneinander bewegbar. Darüber hinaus ist denkbar, dass der Pflanzspaten mehr abgesenkt wird als der Niederhalter, das heißt insgesamt eine größere Strecke zurücklegt.

In der Praxis kann das Erdreich zu einem Damm geformt werden, der beispielsweise einen etwa halbkreisförmigen oder trapezförmigen Querschnitt aufweist. Weiterhin kann es vorgesehen sein, den Damm zumindest teilweise mit einer Folie abzudecken.

Dadurch, dass die Pflanzen je nach Pflanzenart und Beschaffenheit sehr unterschiedlich sein können, kann es passieren, dass auf dem Erdreich, insbesondere auf dem Damm, abgelegte Pflanzen, die beispielsweise mittels einer vorstehend beschriebenen Fördereinrichtung auf dem Erdreich abgelegt wurde, vor dem Einpflanzen mittels des Pflanzspatens verrutschen oder gar den Damm herabrutschen. Dies hat zur Folge, dass die Pflanzen nicht von dem Pflanzspaten erfasst und eingepflanzt werden können. Daher ist erfindungsgemäß vorgesehen, dass Pflanzmaschine eine Haltevorrichtung umfasst, mittels der eine jeweilige Pflanze bis zum Einpflanzen durch den Pflanzspaten fixiert werden kann, bis der Pflanzspaten sie erfasst und in das Erdreich drückt. Diese Haltevorrichtung kann beispielsweise als Teil einer Fördereinrichtung ausgebildet sein, mittels der die Pflanzen transportiert werden und auf dem Erdreich abgelegt oder an dem Erdreich positioniert werden können. Die Fördereinrichtung kann bei einer solchen Ausgestaltung beispielsweise Aufnahmen aufweisen, die die Haltevorrichtung bilden. Die Haltevorrichtung gibt die Pflanze erst dann frei, wenn letztere von dem Pflanzspaten erfasst wird. Hierdurch lässt sich die Quote erfolgreich gepflanzter Pflanzen deutlich steigern.

Alternativ oder zusätzlich zu einer an einer Fördereinrichtung ausgebildeten Haltevorrichtung ist es denkbar, dass die Haltevorrichtung in Form eines Greifarms separat von einer etwaigen Fördereirichtung ausgebildet ist. Mittels eines solchen Greifarms kann eine jeweilige Pflanze ergriffen und in einer gewünschten Position gehalten werden kann, bis diese durch den Pflanzspaten in das Erdreich eingepflanzt wird. Bei dieser Ausgestaltung kann die Pflanzmaschine gleichwohl eine Fördereinrichtung aufweisen, mittels der die Pflanzen zu dem Erdreich geführt werden. Dort werden sie mittels der Haltevorrichtung lediglich noch für das Einpflanzen, das mittels des Pflanzspatens erfolgt, gehalten.

Auch ist es denkbar, dass ein Greifarm gleichermaßen die Haltevorrichtung und die Fördereinrichtung bildet. Dies kann beispielsweise der Fall sein, wenn mittels eines Greifarms zu setzende Pflanzen ausgehend von einem Pflanzenvorrat zu einer zur Einpflanzung bestimmten Pflanzposition bewegt werden und dort sogleich mittels des Greifarms bis zum Einpflanzen gehalten werden. Der Greifarm sorgt bei einer solchen Ausgestaltung sowohl für den Transport der Pflanze zu der jeweiligen Stelle als auch deren Fixierung vor der Erfassung durch den Pflanzspaten.

Nach Erreichen der gewünschten Pflanztiefe wird der Pflanzspaten wieder angehoben, mithin aus dem Erdreich hinausgezogen. Hierbei wird der Niederhalter nicht bewegt, sodass er ein Herausziehen der Pflanze aus dem Erdreich dadurch verhindert, indem er diese niederhält. Nachdem der Pflanzspaten vollständig aus dem Pflanzloch herausgezogen ist, wird auch der Niederhalter aufwärtsbewegt. Sodann kann die Pflanzeinheit zur nächsten Pflanzposition bewegt werden. Der Niederhalter und der Pflanzspaten, die gemeinsam die Pflanzeinheit bilden, können zudem auch gemeinsam bewegt werden, was insbesondere für eine aufwärts gerichtete Bewegung sinnvoll sein kann, die sich an ein Setzen einer Pflanze anschließt.

Falls der Pflanzspaten in bevorzugter Weise in seiner Form besonders schlank ist, das heißt einen schmalen beziehungsweise flachen Querschnitt aufweist, wird das Erdreich durch ihn besonders wenig eröffnet. Somit kommt die frisch eingesetzte Pflanze besonders gut in Kontakt mit dem Erdreich, sodass diese besonders gut anwächst. Hierdurch ergibt sich der Vorteil, dass mittels der Pflanzmaschine Pflanzen besonders schonend und erfolgreich (im Sinne eines dauerhaften Anwachsens und einer guten Nährstoffversorgung über die Wurzeln) gepflanzt werden können. Da wurzelnackte Pflanzen keinen eigenen Bodenkontakt mitbringen, muss die Versorgung mit Feuchtigkeit bzw. Wasser durch Kontakt zum umgebenden Erdreich unmittelbar, spätestens innerhalb weniger Stunden, erfolgen.

Gemäß einer besonders vorteilhaften Ausgestaltung der Erfindung ist mindestens eine Versorgungsleitung vorgesehen, mittels der einer mittels der Pflanzeinheit gesetzten Pflanze im Zuge des Setzvorgangs eine Flüssigkeit zuleitbar ist. Bei dieser Flüssigkeit kann es sich beispielsweise um Wasser und/oder ein Gemisch aus Wasser und anderen Mitteln handeln. Derartige Mittel können beispielsweise ein Beizmittel oder ein Düngemittel sein. Mit anderen Worten kann eine solche Zugabe auf jeweils vorliegende Anforderungen der Pflanze und/oder Gegebenheiten beispielsweise des Erdreichs angepasst werden. Hierdurch ergibt sich der Vorteil, dass die Pflanze besonders bedarfsgerecht versorgt wird beziehungsweise ist und somit besonders gut gedeiht.

Eine weitere besonders vorteilhafte Ausgestaltung ist gekennzeichnet durch einen oberen Endschalter und einen unteren Endschalter, wobei mittels des unteren Endschalters eine untere Endlage und mittels des oberen Endschalters eine obere Endlage zumindest des Pflanzspatens einstellbar ist, wobei der Pflanzspaten zwischen den Endlagen auf und ab bewegbar ist. Mit anderen Worten kann somit ein Hub - nämlich zwischen der unteren Endlage und der oberen Endlage - des Pflanzspatens eingestellt werden. In Abhängigkeit beispielsweise von einer Pflanzenart kann somit eingestellt werden, wie tief diese in das Erdreich eingepflanzt werden soll. In diesem Zusammenhang kann es beispielsweise sinnvoll sein, sogenannte Pfahlwurzler (Pflanzen, die tiefwurzeln) besonders tief einzupflanzen, indem der Pflanzspaten tief in das Erdreich eingeführt wird. Dementsprechend kann es sinnvoll sein, sogenannte Flachwurzler besonders flach einzupflanzen, das heißt mit dem Pflanzspaten besonders flach in das Erdreich einzudringen. Hierdurch ergibt sich der Vorteil, dass die Pflanzmaschine besonders individuell betreibbar und somit für besonders viele Pflanzarten geeignet ist.

Auch der Niederhalter kann mit einem unteren Endschalter und einem oberen Endschalter zusammenwirken, wobei es ebenfalls denkbar ist, dass dem Niederhalter und dem Pflanzspaten jeweils eigene Endschalter zugeordnet sind.

Weiterhin ist die Erfindung dann besonders vorteilhaft, wenn der Aktor von einem Linearantrieb gebildet ist, wobei vorzugsweise der Linearantrieb einen elektrischen, hydraulischen und/oder pneumatischen Antrieb umfasst. In der Praxis hat sich gezeigt, dass der Linearantrieb besonders störunanfällig ist. Hierdurch ergibt sich der Vorteil, dass die Pflanzmaschine besonders zuverlässig und wartungsarm betreibbar ist.

In einer besonders vorteilhaften Ausgestaltung der Erfindung weist diese ein Getriebe auf, das mit dem Aktor zusammenwirkt, wobei vorzugsweise das Getriebe geeignet ist, eine Drehbewegung des Aktors in eine Linearbewegung des Pflanzspatens und/oder des Niederhalters zu übersetzen. Hierdurch ergibt sich der Vorteil, dass ein typischerweise von einem Zugfahrzeug zur Verfügung gestelltes Antriebsmoment, das beispielsweise von einer Zapfwelle des Zugfahrzeugs übernommen wird, mittels des Getriebes zum linearen Betrieb des Pflanzspatens nutzbar gemacht wird.

Ein weiterer Vorteil ergibt sich dann, wenn der Niederhalter mit einem Kontaktschalter zusammenwirkt, der dazu geeignet ist, einen Kontakt des Niederhalters mit einer Pflanze festzustellen, sodass bei Feststellung des Kontakts oder zumindest in kausalem Zusammenhang mit einer solchen Feststellung eine Abwärtsbewegung des Niederhalters gestoppt werden kann. Der Niederhalter wird demnach in Kontakt mit dem Oberteil der Pflanze gebracht und in Abhängigkeit dieses Kontaktes wird die Abwärtsbewegung gestoppt. Hierbei kann der Niederhalter entweder unmittelbar bei Feststellen des Kontakts stoppen oder erst mit einem Zeitversatz, beispielsweise 1 s. In jedem Fall ist sichergestellt, dass der Niederhalter in einem Kontakt mit der Pflanze steht, der es ihm ermöglicht, eine Niederhaltekraft auf die Pflanze auszuüben, sodass diese bei der Aufwärtsbewegung des Pflanzspatens nicht aus dem Erdreich herausgezogen wird. Gerade bei besonders empfindlichen Pflanzenarten besteht die Gefahr, dass die Pflanze beschädigt oder zerstört wird, falls der Niederhalter zu weit beziehungsweise zu fest auf diese drückt. In diesem Zusammenhang ist insbesondere eine Ausgestaltung denkbar, in der zur Begrenzung der Pflanztiefe eine elektronisch ermittelte Berührung des Niederhalters mit der eingesetzten Pflanze genutzt werden kann. Weiterhin sind nicht alle Pflanzen gleich, manche weisen ein größeres Oberteil auf, andere ein kleineres. Die kontaktabhängige Bewegungssteuerung des Niederhalters ermöglicht folglich eine Anpassung der Bewegung des Niederhalters an jede individuelle Pflanze. Durch die erfindungsgemäße Ausgestaltung ergibt sich der Vorteil, dass der Niederhalter die Pflanzen besonders schonend und gleichzeitig zuverlässig niederhält.

In einer weiteren besonders vorteilhaften Ausgestaltung der Erfindung ist vorgesehen, dass der Pflanzspaten eine innenliegende Leitung aufweist, die sich bis zu einem unteren Ende des Pflanzspatens erstreckt, wobei vorzugsweise die Leitung von einer Ausnehmung in dem Pflanzspaten gebildet ist. Hierbei ist insbesondere denkbar, dass der Pflanzspaten zumindest bereichsweise hohl ausgeführt wird. Durch diese Leitung ist beispielsweise eine bereits oben genannte Flüssigkeit in das Erdreich einleitbar. In diesem Zusammenhang ist es besonders vorteilhaft, dass die Flüssigkeit direkt in das Erdreich, insbesondere in einem Wurzelbereich der Pflanze eingeleitet werden kann. Die Flüssigkeit kann hierbei insbesondere als Tröpfchenbewässerung erfolgen, das heißt sie wird zumindest im Wesentlichen tröpfchenweise eingeleitet. Hierdurch kann die Flüssigkeit somit besonders gezielt eingebracht werden und Verluste, beispielsweise durch Verdunstung an der Oberfläche des Erdreichs werden minimiert. Weiterhin können etwaige Nährstoffzusätze mittels des Pflanzspatens direkt an die Wurzel der Pflanze gebracht werden, sodass die Nährstoffe unmittelbar der Pflanze zur Verfügung stehen. Hierdurch ergibt sich der Vorteil, dass die Pflanzmaschine besonders effizient betrieben werden kann. Weiterhin ist hierdurch vorteilhafterweise bereits beim Pflanzen eine ausreichende Bodenfeuchtigkeit sichergestellt, sodass auf intensives Andrücken der Wurzeln verzichtet werden kann, wodurch die Pflanzen besonders schonend behandelt werden können.

Gemäß einer weiteren besonders vorteilhaften Ausführung ist der Rahmen der Pflanzmaschine an einem Ende an mindestens einem Laufrad, vorzugsweise einer Mehrzahl von Laufrädern, aufgehängt. Der Rahmen liegt somit zumindest mittelbar, nämlich mittels des mindestens einen Laufrads, auf dem Erdreich ab, wobei das Laufrad auf dem beziehungsweise über das Erdreich abrollt. Auf diese Weise ist sichergestellt, dass der Rahmen in einem gleichbleibenden Abstand zu dem Erdreich ausgerichtet ist, unabhängig davon, ob das Laufrad beispielsweise eine Mulde oder einen Hügel überfährt. Hierdurch ergibt sich der Vorteil, dass die an dem Rahmen angeordnete Pflanzeinheit unabhängig von einer Beschaffenheit des Erdreichs besonders konstant betrieben werden kann und somit die Pflanzen mit besonders gleichmäßigem Ergebnis eingepflanzt werden können.

Ein weiterer Vorteil ergibt sich dann, wenn die Pflanzmaschine eine Fördereinrichtung aufweist, mittels der die Pflanzen auf dem Erdreich ablegbar sind beziehungsweise in eine jeweilige Pflanzposition gebracht und/oder in dieser gehalten werden können. Die Fördereinrichtung kann beispielsweise ein Laufband und einen Laufbandantrieb aufweisen, mittels dessen das Laufband drehantreibbar ist. Die Pflanzen können dem Laufband automatisch, beispielsweise von einem Pflanzenvorrat auf der Pflanzmaschine selbst oder von einem mitgeführten Beiwagen, zugeführt werden. Außerdem ist es denkbar, dass die Pflanzen dem Laufband manuell zugeführt werden, mithin von Hand auf dieses abgelegt werden. Mittels der Fördereinrichtung können die Pflanzen vorteilhafterweise besonders gleichmäßig und mit besonders geringem Aufwand auf oder über dem Erdreich positioniert werden. Bevorzugt können die Pflanzen ferner in Pflanzposition unter dem Pflanzspaten gehalten werden, bis der Pflanzspaten sie ergreift. Eine solche Ausführung ist vorstehend bereits beschrieben. Sie sieht beispielsweise vor, dass die Fördereinrichtung Aufnahmen umfasst, wobei die Aufnahme jeweils zur Aufnahme und Halterung einer Pflanze eingerichtet sind. Bei einer solchen Ausgestaltung ist eine Haltevorrichtung der Pflanzmaschine an deren Fördereinrichtung angeordnet. Mittels einer solchen Fördereinrichtung sind die Pflanzen besonders gut für ein Einpflanzen mittels der Pflanzeinheit vorbereitet. Hierdurch ergibt sich der Vorteil, dass die Pflanzmaschine besonders effizient betrieben werden kann.

Gemäß einer weiteren besonders vorteilhaften Ausgestaltung der Erfindung umfasst die Pflanzmaschine eine Übertragungseinrichtung, mittels der die Pflanzeinheit bzw. der Träger, an dem die Pflanzeinheit angeordnet ist, an dem Rahmen befestigt ist. Die Übertragungseinrichtung ist vorzugsweise dazu eingerichtet, die Pflanzeinheit insbesondere in einer Richtung quer zu einer Fahrtrichtung der Pflanzmaschine und zumindest im Wesentlichen parallel zum Erdreich zu bewegen. Mit anderen Worten kann die Pflanzeinheit derart bewegt werden, dass sie besonders günstig in Kontakt mit der zu setzenden Pflanze kommt, sodass sie diese besonders präzise einpflanzen kann. Hierdurch ergibt sich der Vorteil, dass die Pflanzmaschine besonders präzise und fehlerfrei betrieben werden kann. Zur Bewegung der Pflanzeinheit entlang der Übertragungseinrichtung kann insbesondere ein Linearantrieb verwendet werden. Ferner ist es denkbar, dass die Pflanzeinheit bzw. der Träger, an dem die Pflanzeinheit angeordnet ist, entlang einer Gleitschiene der Übertragungseinrichtung bewegbar ist.

In einer weiteren besonders vorteilhaften Ausgestaltung umfasst die Pflanzmaschine einen Sensor, der beispielsweise in Form eines Ultraschallsensors ausgebildet sein kann. Der Sensor ist der Pflanzeinheit zugeordnet und ist vorzugsweise in Fahrtrichtung der Pflanzmaschine betrachtet vor der Pflanzeinheit angeordnet. Mittels des Sensors kann eine Position einer als nächstes zu setzenden Pflanze auf dem Erdreich ermittelt werden, sodass die Pflanzeinheit, insbesondere der Pflanzspaten, in Abhängigkeit von der ermittelten Position in eine entsprechende Position gebracht werden kann. In diesem Zusammenhang ist es besonders vorteilhaft, wenn die Pflanzeinheit, insbesondere mittels der vorgenannten Übertragungseinrichtung, derart quer zur Fahrtrichtung und zumindest im Wesentlichen parallel zum Erdreich bewegt werden kann, dass der Pflanzspaten besonders präzise insbesondere über den Wurzeln ausgerichtet ist, sodass er diese ergreifen und ins Erdreich einpflanzen kann. Hierdurch können vorteilhafterweise Beschädigungen an der Pflanze vermieden werden und außerdem kann die Pflanze besonders präzise in das Erdreich eingepflanzt werden.

Die Erfindung betrifft außerdem ein Verfahren zum Setzen einer Pflanze mittels einer Pflanzmaschine gemäß Anspruch 9. Vorteilhafte Ausgestaltungen des Verfahrens ergeben sich aus den zugehörigen Unteransprüchen. Das Vorgehen sowie die sich daraus ergebenden Vorteile sind vorstehend bereits beschrieben. Ausführungen zu der Pflanzmaschine sowie sich daraus ergebende Vorteile sind gleichermaßen für das Verfahren gültig sowie umgekehrt. Für die Durchführung des Verfahrens ist es nicht entscheidend, ob das Erdreich, in das die Pflanze(n) gesetzt wird, von einer Abdeckung, insbesondere einer Folie, abgedeckt ist oder nicht. Eine solche Abdeckung kann aus den eingangs genannten Gründen sinnvoll sein. Sofern eine solche vorhanden ist, wird sie unmittelbar vor dem Eindringen des Pflanzspatens in das Erdreich von dem Pflanzspaten durchstoßen und - sofern noch keine Öffnung vorhanden ist - hierdurch eine Öffnung geschaffen.

Besonders vorteilhaft ist das Verfahren dann, wenn die untere Endlage des Pflanzspatens und/oder die untere Endlage des Niederhalters relativ zu einer an der Pflanzmaschine befindlichen Referenzstelle oder relativ zu einer Oberfläche des Erdreichs eingestellt wird. Hierdurch kann vorteilhafterweise gewährleistet werden, dass die Pflanze jeweils entsprechend ihrer Bedürfnisse mit der auf sie abgestimmten Pflanztiefe eingepflanzt wird. In diesem Zusammenhang ist die Pflanztiefe insbesondere relativ zu der Oberfläche des Erdreichs an der Pflanzposition ausschlaggebend. Dadurch, dass die Pflanztiefe beispielsweise relativ zu der Oberfläche des Erdreichs eingestellt wird, können Unebenheiten, beispielsweise in Form von Hügeln und/oder Mulden, berücksichtigt werden. Mit anderen Worten kann somit eine besonders gleichmäßige Pflanztiefe erreicht werden, und zwar zumindest im Wesentlichen unabhängig davon, wie das Erdreich an der Pflanzposition beschaffen ist. Hierdurch ergibt sich der Vorteil, dass das Verfahren besonders vielseitig und bedarfsgerecht einsetzbar ist.

Ein weiterer Vorteil ergibt sich dann, wenn das Erdreich mit einer wasserdichten Abdeckung, insbesondere einer Folie, abgedeckt ist, wobei mindestens eine zu setzende Pflanze auf der Folie aufliegt beziehungsweise oberhalb der Folie gehalten wird und wobei der Pflanzspaten im Zuge seiner Abwärtsbewegung die Folie durchstößt und ein Loch schafft, durch das der Pflanzspaten die Wurzeln der zu setzenden Pflanze in das Erdreich drückt. Die Vorteile sind bereits hinreichend erläutert.

In einer weiteren besonders vorteilhaften Ausgestaltung ist vorgesehen, dass die Pflanzeinheit bei Vorliegen sowohl des Pflanzspatens als auch des Niederhalters jeweils in deren oberen Endlagen in einem Abstand vertikal oberhalb des Erdreichs angeordnet ist, der eine vertikal zum Erdreich gemessene Ausdehnung einer mittelbar oder unmittelbar auf dem Erdreich aufliegenden Pflanze übersteigt. Hierdurch kann vorteilhafterweise gewährleistet werden, dass die Pflanzeinheit im Zuge einer Bewegung der Pflanzmaschine entlang einer Pflanzstrecke oberhalb der Pflanze positioniert werden kann, ohne mit dieser zu kollidieren. Demzufolge ergibt sich der Vorteil, dass das Verfahren besonders pflanzenschonend einsetzbar ist.

In einer besonders bevorzugten Ausgestaltung des Verfahrens kann die Pflanze bei Vorliegen in einer Position auf oder über dem Erdreich so lange mittels einer Haltevorrichtung der Pflanzmaschine gehalten werden, bis sie von dem Pflanzspaten erfasst wird. Dies ist vorstehend bereits im Zusammenhang mit der Pflanzmaschine erläutert. Mittels der Halterung der Pflanzen kann insbesondere die Quote erfolgreich gepflanzter Pflanzen gesteigert werden, da der Pflanzspaten die an definierter Position gehaltenen Pflanzen zuverlässig erfassen kann.

Ferner kann es besonders vorteilhaft sein, wenn die Pflanzen mittels einer Fördereinrichtung der Pflanzmaschine zu dem Erdreich transportiert werden, sodass die Pflanzen auf oder an dem Erdreich positioniert sind. Dieser Transport erfolgt unabhängig von der Pflanzeinheit. Hierbei können die Pflanzen beispielsweise mittels der Fördereinrichtung an einer Pflanzposition auf dem Erdreich abgelegt werden oder mittels einer Halteeinrichtung in einer bestimmten Position auf oder über dem Erdreich gehalten werden, bis die jeweilige Pflanze von dem Pflanzspaten erreicht und mittels des letzteren in das Erdreich eingebracht wird. Die Zuführung der Pflanzen zu dem Erdreich mittels einer Fördereinrichtung hat den Vorteil, dass die Pflanzen unabhängig von der Pflanzeinheit der Pflanzmaschine bewegt werden, sodass die Pflanzeinheit nur noch für das Einpflanzen der Pflanzen an einer jeweiligen Pflanzposition verantwortlich ist.

### Ausführungsbeispiele

Die Erfindung ist nachstehend anhand eines Ausführungsbeispiels, das in den Figuren dargestellt ist, näher erläutert. Es zeigt:
- Fig. 1:: eine schematische Ansicht einer Pflanzeinheit einer erfindungsgemäßen Pflanzmaschine, wobei ein Pflanzspaten in einer oberen Endstellung ist;
- Fig. 2:: eine schematische Ansicht der Pflanzeinheit der erfindungsgemäßen Pflanzmaschine, wobei der Pflanzspaten in einer unteren Endstellung ist;
- Fig. 3:: eine schematische Ansicht der Pflanzeinheit, wobei ein Niederhalter eine Pflanze niederhält;
- Fig. 4:: eine schematische Ansicht der Pflanzmaschine in einem vorderen Bereich eines Rahmens;
- Fig. 5:: eine schematische Darstellung einer Anordnung mehrerer Pflanzeinheiten; und
- Fig. 6:: eine schematische Ansicht einer Pflanzeinheit gemäß einer weiteren Ausgestaltung.

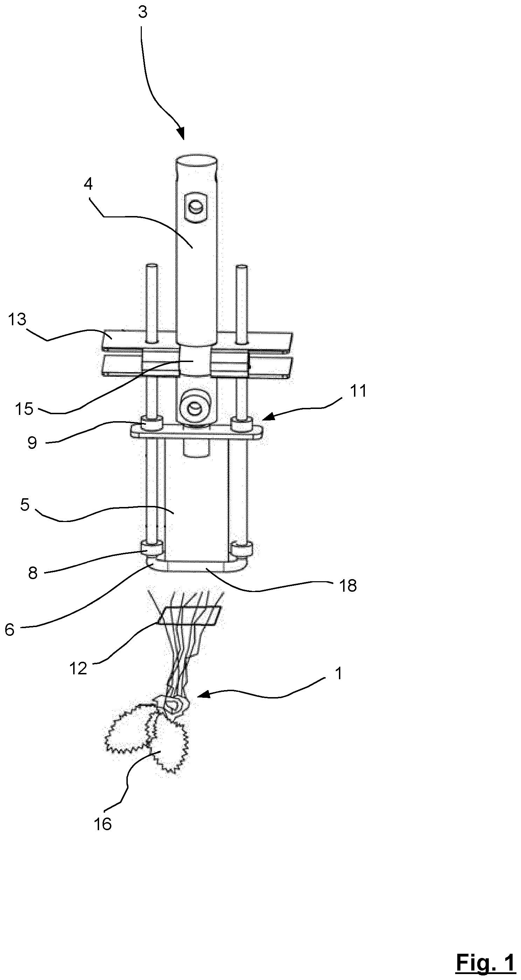

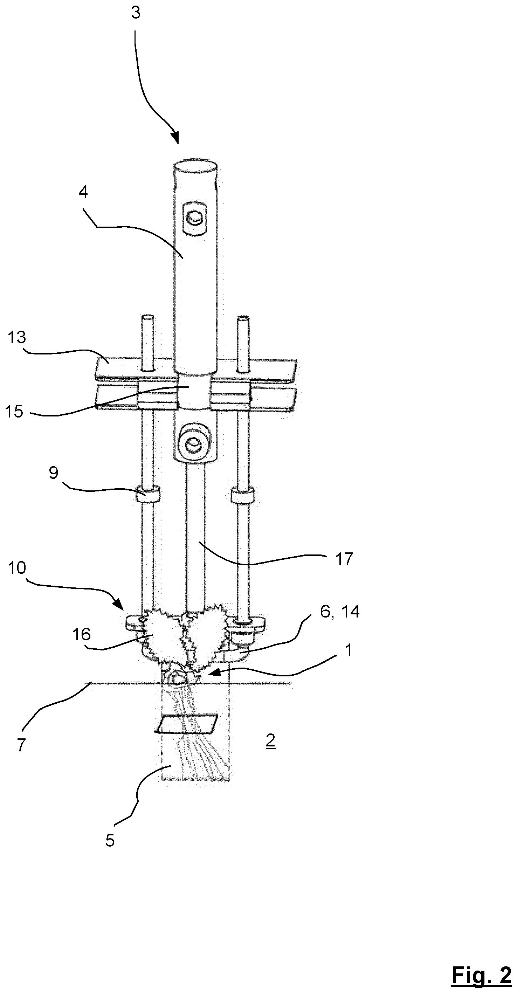

**Figur 1** zeigt in einer schematischen Ansicht eine Pflanzeinheit **3** einer erfindungsgemäßen Pflanzmaschine, die aus Gründen der Übersichtlichkeit nicht als Ganze dargestellt ist. Die Pflanzeinheit **3** ist mittels eines Trägers **13** hier mittelbar über eine Übertragungseinrichtung **25** an einem Rahmen **23** der Pflanzmaschine angeordnet und umfasst einen Pflanzspaten **5** sowie einen Niederhalter **6.** Hierbei sind sowohl der Pflanzspaten **5** als auch der Niederhalter **6** derart an dem Träger **13** gelagert, dass diese relativ zu dem Träger **13** - und mithin relativ zu dem Rahmen **23** - auf und ab bewegt werden können. Hierfür weist die Pflanzeinheit **3** vorliegend einen Aktor **4** auf, der hier als Linearantrieb ausgestaltet ist. In diesem Zusammenhang sind der Pflanzspaten **5** und der Niederhalter **6** zwischen einer oberen Endlage **11,** die in **Figur 1** gezeigt ist, und einer unteren Endlage **10,** die in **Figur 2** gezeigt ist, bewegbar. Außerdem ist vorliegend ein Getriebe **15** vorgesehen, mittels dessen zumindest der Pflanzspaten **5** und der Niederhalter **6** unabhängig voneinander bewegbar sind. Das Getriebe **15** ist dazu eingerichtet, eine rotatorische Bewegung in eine Linearbewegung zu übersetzen.

In der oberen Endlage **10** sind vorliegend der Pflanzspaten **5** und der Niederhalter **6** zumindest im Wesentlichen vollständig, mithin an den Träger **13** anschlagend, nach oben bewegt. Dementsprechend sind der Pflanzspaten **5** und der Niederhalter **6** in der unteren Endlage **10** weitestmöglich nach unten bewegt. In der unteren Endlage **10** ist der Pflanzspaten **5** zumindest im Wesentlichen durch eine Oberfläche **7** eines Erdreichs **2** (und ggf. durch eine auf dem Erdreich **2** liegenden Abdeckung, insbesondere eine Folie) in dieses eingedrungen. Mit anderen Worten befindet sich der Pflanzspaten **5** zumindest überwiegend in dem Erdreich **2,** wie in **Figur 2** erkennbar ist.

Wie beispielsweise in **Figur 1** erkennbar ist, umfasst die Pflanze **1** ein Oberteil **16** und Wurzeln **12.** Üblicherweise ist das Oberteil **16** besonders empfindlich, da es sich hierbei beispielsweise um feine Blätter, Blüten und/oder Früchte handeln kann. Das Oberteil **16** ist der Teil der Pflanze **1,** der nach dem Setzen der Pflanze **1** oberhalb des Erdreichs **2** verbleibt und nicht in das Erdreich **2** eingedrückt wird.

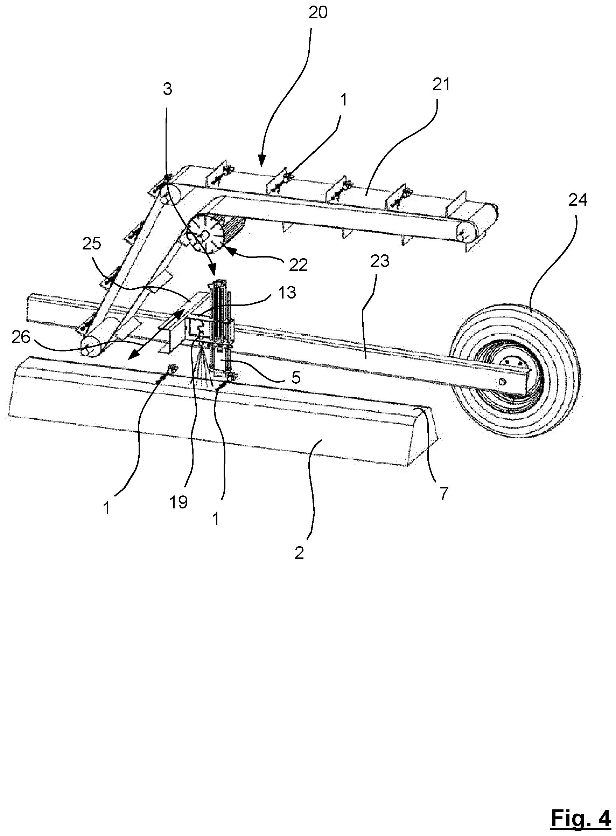

Um nun eine Pflanze **1** mittels der Pflanzeinheit **3** in das Erdreich **2** einzupflanzen, werden die folgenden Verfahrensschritte durchgeführt: Im Vorfeld befinden sich die Pflanzen **1** in einem vordefinierten Abstand zur Oberfläche **7** des Erdreichs **2** bzw. zu einer auf dem Erdreich **2** liegenden Folie. Dies kann beispielsweise von Hand oder mittels einer Fördereinrichtung **20** erfolgen, die beispielhaft aus **Figur 4** erkennbar ist. Außerdem befinden sich der Pflanzspaten **5** und der Niederhalter **6** in ihren jeweiligen oberen Endlagen **11,** wie in **Figur 1** erkennbar ist.

Sodann wird zumindest der Pflanzspaten **5** mittels des Aktors **4** derart nach unten bewegt, dass er die Pflanze **1** erfasst und sie gleichzeitig durch Durchstoßen der Folie in das Erdreich **2** einbringt. Mit anderen Worten wird mittels des Pflanzspatens **5** eine Öffnung in der Folie **2** bewirkt, durch die sodann die Pflanze **1** gewissermaßen in das Erdreich hineingedrückt wird. Die Pflanze **1** ist somit eingepflanzt, sodass die Wurzeln **12** zumindest im Wesentlichen vollständig im Erdreich **2** angeordnet sind.

Dadurch, dass der Pflanzspaten **5** zumindest die Wurzeln **12** in das Erdreich **2** einführt beziehungsweise sie in dieses hineindrückt, richtet sich das bis dahin auf der Oberfläche **7** aufliegende Oberteil **16** zumindest teilweise auf. In diesem aufgerichteten Zustand ist das Oberteil **16** besonders gut für den Niederhalter **6** erfassbar. Demzufolge wird der Niederhalter **6** mit einem zeitlichen Versatz, insbesondere bezogen auf das Eindringen des Pflanzspatens **5** in das Erdreich **2** nachzeitig, hinabbewegt. Auf diese Weise kann der Niederhalter **6** die nun zumindest teilweise aufgerichtete Pflanze **1,** insbesondere deren Oberteil **16,** kontaktieren und somit niederhalten. Hierbei wird beziehungsweise ist der Niederhalter **6** derart eingestellt, dass er die Pflanze **1** in einer endgültigen Pflanzposition niederhält, aber nicht zu starken Druck auf diese ausübt. Der Niederhalter **6** dient somit dazu, die Pflanze **3** in ihrer Pflanzposition zumindest temporär zu fixieren, insbesondere niederzuhalten. Dies ist notwendig, da die Pflanze **1** bei einem Herausziehen des Pflanzspatens **5** ansonsten mit diesem hinausgezogen werden könnte.

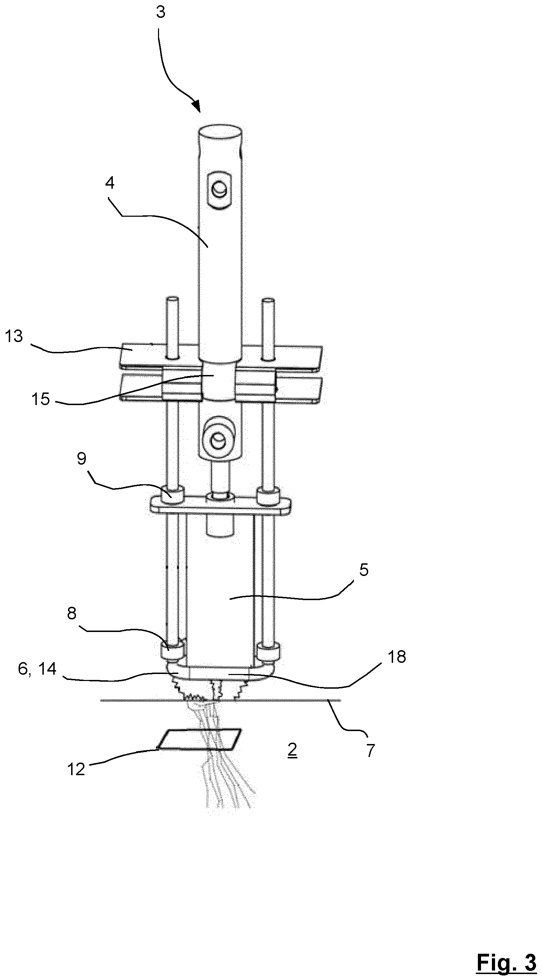

Im nächsten Schritt wird somit der Pflanzspaten **5** nach oben aus dem Erdreich **2** hinausgezogen, während der Niederhalter **6** in seiner unteren Endlage **10** verweilt, sodass er ein Herausziehen der Pflanze **1** aus dem Erdreich **2** verhindert. Dies ist in **Figur 2** erkennbar. Sobald der Pflanzspaten **5** zumindest im Wesentlichen vollständig aus dem Erdreich **2** hinausgezogen ist, wird auch der Niederhalter **6** nach oben gezogen und somit in seine obere Endlage **11** verbracht. Dies ist in **Figur 3** erkennbar.

In Abhängigkeit davon, wie tief die Pflanze **1** eingepflanzt werden soll beziehungsweise muss, kann eingestellt werden, wie weit der Pflanzspaten **5** in das Erdreich **2** eindringt. Vorliegend handelt es sich bei der Pflanze **1** um einen tiefwurzelnden Pfahlwurzler, sodass diese besonders tief eingepflanzt werden sollte. Hierzu kann mittels eines unteren Endschalters **8** die untere Endlage **10** beispielsweise des Pflanzspatens **5** eingestellt werden. Außerdem kann analog dazu mittels eines oberen Endschalters **9** die obere Endlage **11** beispielsweise des Pflanzspatens **5** und der Niederhalters **6** eingestellt werden. Mit anderen Worten kann eingestellt werden, wie weit der Pflanzspaten **5** in das Erdreich **2** eindringt und wie weit der Niederhalter **6** nach unten bewegt wird, um auf diese Weise die Pflanze **1** niederzuhalten und somit zu verhindern, dass diese mit dem Pflanzspaten **5** aus dem Erdreich **2** herausgezogen wird.

Hierzu ist es vorliegend beispielsweise vorgesehen, dass der Niederhalter **6** mit einem Kontaktschalter **14** zusammenwirkt, der dazu geeignet ist, einen Kontakt des Niederhalters **6** mit einer Pflanze **1** festzustellen, sodass bei Feststellung des Kontakts eine Abwärtsbewegung des Niederhalters **6** gestoppt werden kann. Es ist denkbar, dass die Abwärtsbewegung des Niederhalters **6** nicht unmittelbar, sondern mit einer voreingestellten Verzögerung, vorliegend beispielsweise **1** s, nach Feststellung des Kontakts erfolgt. Außerdem ist es denkbar, dass die Abwärtsbewegung des Pflanzspatens **5** bei Kontakt des Niederhalters **6** mit der zu setzenden Pflanze **1** gestoppt wird. Hierdurch ergibt sich der Vorteil, dass die Pflanztiefe genau passend zu dem Oberteil **16** der Pflanze **1** eingestellt beziehungsweise begrenzt werden kann.

Weiterhin ist vorliegend vorgesehen, dass der Pflanzspaten **5** eine innenliegende Leitung **17** aufweist. Diese weist an einem unteren Ende des Pflanzspatens **5** eine Öffnung **18** auf, sodass durch die Leitung **17** eine Flüssigkeit in das Erdreich **2** einleitbar ist. Bei der Flüssigkeit handelt es sich vorliegend um Wasser beziehungsweise ein Gemisch aus Wasser und weiteren Mitteln, bei denen es sich um Düngemittel, Beizmittel, Pflanzenschutzmittel oder dergleichen handeln kann. Die Flüssigkeit wird insbesondere dann durch die Öffnung ausgeleitet, wenn der Pflanzspaten **5** weitestmöglich in das Erdreich **2** eingedrungen ist, sich mithin in seiner unteren Endlage **10** befindet. Auf diese Weise wird die Flüssigkeit der Pflanze **1,** insbesondere deren Wurzeln **12,** zielgerichtet zugeführt.

**Figur 4** zeigt einen vorderen Bereich der Pflanzmaschine, wobei diese einen Rahmen **23** und zwei mit dem Rahmen **23** verbundene Laufräder **24** aufweist, von denen in **Figur 4** nur eines dargestellt ist. Der Rahmen **23** ist an einem Ende - in **Figur 4** links, allerdings nicht dargestellt - mittels einer Kupplung mit einem ebenfalls nicht dargestellten Zugfahrzeug gekoppelt und an dem gegenüberliegenden Ende - in **Figur 4** rechts - an dem Laufrad **24** aufgehängt. Auf diese Weise liegt der Rahmen **23** mittelbar über das Laufrad **24,** auf dem Erdreich **2** auf. Das Laufrad **24** rollt somit auf dem Erdreich **2** ab und überfährt Mulden und Hügel gleichermaßen, wobei es den Rahmen **23** immer in einem gleichbleibenden Abstand zu dem Erdreich **2** hält.

Wie **Figur 4** außerdem zeigt, umfasst die Pflanzmaschine ferner eine Fördereinrichtung **20.** Mittels dieser sind die Pflanzen 1 auf dem Erdreich **2** ablegbar bzw. an dem Erdreich positionierbar. Vorliegend umfasst die Fördereinrichtung **20** ein Laufband **21** und einen Laufbandantrieb **22,** mittels dessen das Laufband **21** drehantreibbar ist. In diesem Zusammenhang werden die Pflanzen **1** dem Laufband **21** zugeführt, entweder automatisch, beispielsweise von einem Beiwagen, oder manuell, indem die Pflanzen **1** auf das Laufband **21** aufgelegt werden.

Sobald die Pflanzen **1** von dem Laufband **21** auf das Erdreich **2** hinabfallen, liegen die Pflanzen **1** auf der Folie bzw. dem Erdreich **2** auf und sind bereit, mittels der Pflanzeinheit **3** in das Erdreich **2** eingepflanzt zu werden. Hierbei liegen die Pflanzen **1** nicht alle exakt gleich auf dem Erdreich **2.** Begründet dadurch, dass die Pflanzen **1** selbst voneinander unterschiedlich, beispielsweise unterschiedlich groß und/oder schwer, sind und durch ein Herabfallen von dem Laufband **21,** liegen die die Pflanzen **1** nicht gleichmäßig angeordnet auf dem Erdreich **2** bzw. auf einer darauf liegenden Folie.

Wie in **Figur 4** erkennbar ist, weist die Pflanzeinheit **3** einen Sensor **19** auf, der vorliegend als Ultraschallsensor ausgebildet ist. Mittels dieses Sensors **19** ist es möglich, zu ermitteln, wie die jeweils als nächstes zu setzende Pflanze 1 auf dem Erdreich **2** liegt beziehungsweise angeordnet ist. Mit anderen Worten kann mittels des Sensors **19** ermittelt werden, ob beziehungsweise wie schräg die Pflanze 1 von dem Laufband **21** hinabgefallen ist. In diesem Zusammenhang ist die Pflanzeinheit **3** bzw. der ihr zugeordnete Träger **13** mittels einer Übertragungseinrichtung **25** an dem Rahmen **23** angeordnet. Mittels der Übertragungseinrichtung **25,** die hier von einem langgestreckten C-Profil gebildet ist, ist es möglich, die Pflanzeinheit **3** quer zur Fahrtrichtung, mithin in Richtung eines in **Figur 4** dargestellten Pfeiles **26,** zu bewegen. Hierdurch ist es möglich, die Pflanzeinheit **3** derart in Richtung des Pfeiles **26** vor beziehungsweise zurück zu bewegen, dass der Pflanzspaten **5** die Pflanze **1** in Abhängigkeit von deren Position auf dem Erdreich **2,** einpflanzen kann. Mit anderen Worten wird mittels des Sensors **19** ermittelt, wie die Pflanze 1 auf dem Erdreich **2** abliegt und sodann die Pflanzeinheit **3** in Richtung des Pfeils **26** entsprechend verfahren, sodass der Pflanzspaten **5** die Pflanze **1** erfassen und in der vorstehend beschriebenen Weise einpflanzen kann.

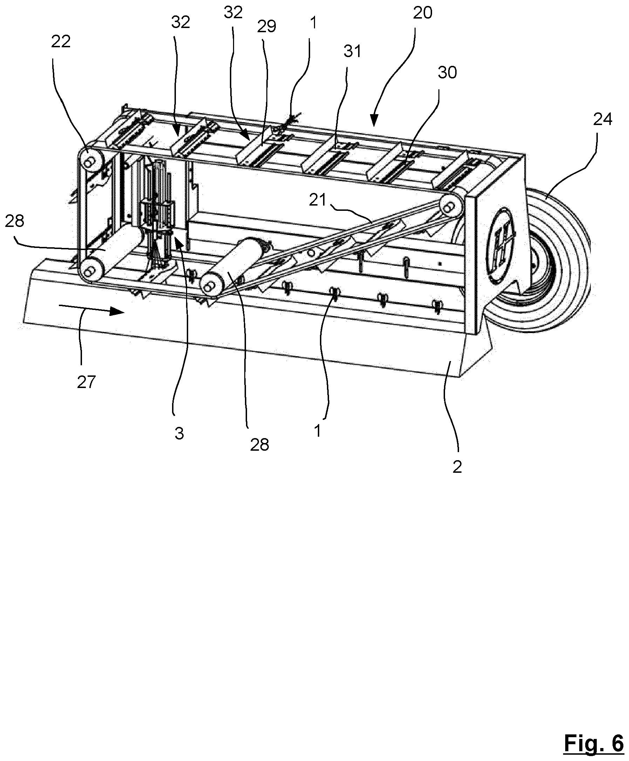

In besonders bevorzugter Weise ist die Pflanzmaschine ferner mittels einer Haltevorrichtung ausgestattet, die hier als Teil der Fördereinrichtung **20** ausgebildet ist. Wie sich anhand der Ausgestaltung gemäß **Figur 6** ergibt, weist das Laufband **21** der Fördereinrichtung **20** zu diesem Zweck in dem gezeigten Beispiel Aufnahmen **31** auf. Mittels dieser Aufnahmen **31** kann eine jeweilige Pflanze **1** erfasst und in einer definierten Position gehalten werden, sodass die Pflanze **1** nicht nur mittels des Förderbands **21** zu einer bestimmungsgemäßen Pflanzposition bewegt, sondern ferner mittels der Aufnahmen **31** in definierter Position unter der Pflanzeinheit **3** platziert und gehalten werden. Dies ist nachstehend in Zusammenhang mit **Figur 6** erläutert. Die Position der jeweiligen Pflanze **1** kann mittels des Sensors **19** ermittelt werden, sodass in Abhängigkeit davon der Pflanzvorgang ausgelöst werden kann.

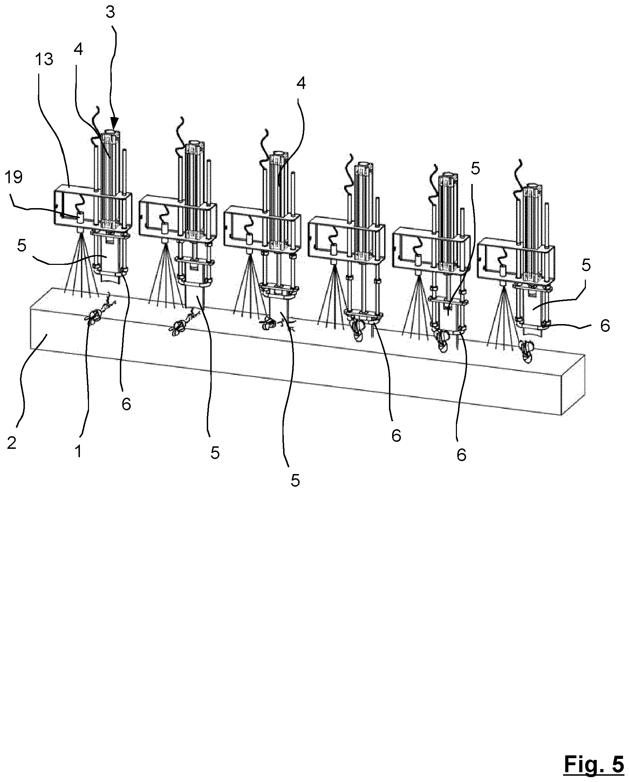

**Figur 5** zeigt in einer schematischen Darstellung einen vollständigen Zyklus, den die Pflanzeinheit **3** im Zuge der Setzung einer Pflanze **1** durchläuft. Der Einfachheit halber sind in **Figur 5** verschiedene Zustände der Pflanzeinheit **3** unmittelbar nacheinander dargestellt.

In Zusammenschau der **Figuren 4** **und** **6** ist deutlich zu erkennen, dass das Laufband **21** aufgelöst mit einer Mehrzahl von Förderelementen **32** ausgebildet ist, wobei jedes Förderelement **32** gemäß der Ausgestaltung in **Figur 6** eine Aufnahme **31** aufweist. Hierbei umfassen die Förderelemente **32** jeweils einen Steg **29** und ein Halteteil **30.** Außerdem ist das Laufband **21** vorliegend mittels vier Umlenkrollen **28** geführt, die auf Wellen **22** gelagert sind. Mindestens eine der Umlenkrollen **24** ist mittels eines nicht dargestellten Drehantriebs drehantreibbar, sodass sich das Laufband **21** in **Figur 6** betrachtet gegen den Uhrzeigersinn bewegt.

Das Halteteil **30** eines jeweiligen Förderelements **32** ist derart gelenkig an dem Steg **29** angeordnet, dass das Halteteil **30** relativ zu dem Steg **29** verschwenkt werden kann. Auf diese Weise kann das Förderelement **32** von einer Freigabeposition, in der die Aufnahme **31** geöffnet ist, das heißt das Halteteil **30** aufgeklappt ist, in eine Schließposition, in der die Aufnahme **31** geschlossen ist, das heißt das Halteteil **30** zugeklappt ist, überführt werden. Mit anderen Worten kann durch Aufklappen des Halteteils **30** relativ zu dem Steg **29** das Förderelement **32** in die Freigabeposition gebracht werden, sodass die Pflanze **1** in die Aufnahme **31** bewegt werden kann. Mittels anschließender Verschwenkung des Halteteils **30** relativ zu dem Steg ("Zuklappen des Halteteils **30**") wird das Förderelement **32** in die Schließposition überführt, sodass die Pflanze **1** in der Aufnahme **31** gehalten ist. Auf diese Weise kann die Pflanze **1** mittels des Laufbands **21** entlang der Förderrichtung (Pfeil **27**) befördert werden.

Im Zuge der Bewegung des Laufbands **21** wird die gehaltene Pflanze **1** über das Erdreich **2** geführt. Dabei ist die Pflanze **1** aufgrund der Lagerung in der Aufnahme **31** und der Halterung zwischen Halteteil **30** und Steg **29** in einer definierten Position, in der sie fixiert bleibt. Hierin besteht die Ausbildung der vorstehend beschriebenen Halteeinrichtung als Teil der Fördereinrichtung **20.** Die Pflanze **1** wird gehalten, bis der Pflanzspaten **5** sie erfasst und einpflanzt. In diesem Zusammenhang öffnet das Förderelement **32** erst dann, wenn der Pflanzspaten **5** die Pflanze **1** ergreift, sodass diese nicht mehr auf dem Erdreich **2** verrutschen kann. Hierzu sind vorliegend Sensoren **19** vorgesehen, die eine Position der Pflanze **1** und/oder der Aufnahme **31** und/oder des Laufbandes **21** erfassen. Die Quote erfolgreich eingepflanzter Pflanzen **1** ist durch die definierte Positionierung und Halterung der Pflanzen **1** mittels der Förderelemente **32** besonders hoch.

### Bezugszeichenliste

- 1: Pflanze
- 2: Erdreich
- 3: Pflanzeinheit
- 4: Aktor
- 5: Pflanzspaten
- 6: Niederhalter
- 7: Oberfläche
- 8: unterer Endschalter
- 9: oberer Endschalter
- 10: untere Endlage
- 11: obere Endlage
- 12: Wurzel
- 13: Träger
- 14: Kontaktschalter
- 15: Getriebe
- 16: Oberteil
- 17: Leitung
- 18: Öffnung
- 19: Sensor
- 20: Fördereinrichtung
- 21: Laufband
- 22: Laufbandantrieb
- 23: Rahmen
- 24: Laufrad
- 25: Übertragungseinrichtung
- 26: Pfeil
- 27: Pfeil
- 28: Umlenkrolle
- 29: Steg
- 30: Halteteil
- 31: Aufnahme
- 32: Förderelement

## Patentansprüche

1. Pflanzmaschine zum Pflanzen wurzelnackter Pflanzen (1) in ein Erdreich (2), umfassend
- einen Rahmen (23),
- eine Kupplung zur Befestigung des Rahmens (23) an einem Zugfahrzeug, sodass die Pflanzmaschine mittels des Zugfahrzeugs entlang einer Pflanzstrecke bewegbar ist,
- einen Träger (13) zur mittelbaren oder unmittelbaren Befestigung einer Pflanzeinheit (3) an dem Rahmen (23),
- eine Pflanzeinheit (3) zum Setzen der Pflanzen (1) in das Erdreich (2) sowie
- einen Aktor (4) zum Betreiben der Pflanzeinheit (3),
wobei die Pflanzeinheit (3) einen Pflanzspaten (5) und einen Niederhalter (6) umfasst,
wobei der Aktor (4) dazu geeignet ist, den Pflanzspaten (5) und den Niederhalter (6) unabhängig voneinander und/oder die Pflanzeinheit (3) als Ganzes senkrecht zu einer Oberfläche (7) des Erdreichs (2) auf und ab zu bewegen,
wobei der Träger (13) mit der daran befestigten Pflanzeinheit (3) derart an dem Rahmen (23) angeordnet ist, dass die Pflanzeinheit (3) bei einem Betrieb der Pflanzmaschine oberhalb des Erdreichs (2) positionierbar ist, sodass zumindest der Pflanzspaten (5) infolge einer relativ zu dem Rahmen (23) abwärts gerichteten Bewegung in das Erdreich (2) eintauchen kann,
**gekennzeichnet durch**
eine Haltevorrichtung, mittels der mindestens eine jeweilige Pflanze (1) auf oder über dem Erdreich (2) in Position gehalten werden kann, bis der Pflanzspaten (5) sie zum Zweck der Einpflanzung in das Erdreich (2) erfasst.

2. Pflanzmaschine nach Anspruch 1, **gekennzeichnet durch** einen oberen Endschalter (9) und einen unteren Endschalter (8), wobei mittels des unteren Endschalters (8) eine untere Endlage (10) und mittels des oberen Endschalters (9) eine obere Endlage (11) zumindest des Pflanzspatens (5) einstellbar ist, wobei der Pflanzspaten (5) zwischen den Endlagen (10, 11) auf und ab bewegbar ist.

3. Pflanzmaschine nach einem der vorhergehenden Ansprüche, **gekennzeichnet durch** ein Getriebe (15), das mit dem Aktor (4) zusammenwirkt, wobei vorzugsweise das Getriebe (15) geeignet ist, eine Drehbewegung des Aktors (4) in eine Linearbewegung des Pflanzspatens (5) und/oder des Niederhalters (6) zu übersetzen.

4. Pflanzmaschine nach einem der vorhergehenden Ansprüche, **dadurch gekennzeichnet, dass** der Niederhalter (6) mit einem Kontaktschalter (14) zusammenwirkt, der dazu geeignet ist, einen Kontakt des Niederhalters (6) mit einer Pflanze (1) festzustellen, sodass bei Feststellung des Kontakts eine Abwärtsbewegung des Niederhalters (6) gestoppt werden kann.

5. Pflanzmaschine nach einem der vorhergehenden Ansprüche, **dadurch gekennzeichnet, dass** die Pflanzeinheit (3) in Querrichtung relativ zu einer Fahrtrichtung der Pflanzmaschine bewegbar ist, sodass die Pflanzeinheit (3) in Abhängigkeit einer genauen Lage einer als nächstes zu setzenden Pflanze (1) relativ zu dieser positionierbar ist, woraufhin die Pflanzeinheit (3) in gewünschter Weise mit der Pflanze (1) zusammenwirken kann.

6. Pflanzmaschine nach Anspruch 5, **gekennzeichnet durch** mindestens einen Sensor (19), vorzugsweise in Form eines Ultraschallsensors, der der Pflanzeinheit (3) zugeordnet ist, wobei mittels des Sensors (19) eine Position einer als nächstes zu setzenden Pflanze (1) erfassbar ist.

7. Pflanzmaschine nach einem der vorangehenden Ansprüche, **gekennzeichnet durch** eine Fördereinrichtung (20), mittels der Pflanzen (1) ausgehend von einem Pflanzenvorrat zu dem Erdreich (2) bewegbar sind, vorzugsweise unmittelbar bis in eine jeweils vorgesehene Pflanzposition, an der eine jeweilige Pflanze (1) in das Erdreich (2) eingepflanzt werden soll.

8. Pflanzmaschine nach einem der vorhergehenden Ansprüche, **dadurch gekennzeichnet, dass** die Haltevorrichtung in Form eines Greifarms oder als Teil einer Fördereinrichtung (20) ausgebildet ist.

9. Verfahren zum Setzen einer Pflanze (1) mittels einer Pflanzmaschine, die Pflanzmaschine umfassend
- einen Rahmen (23),
- eine Kupplung zur Befestigung des Rahmens (23) an einem Zugfahrzeug, sodass die Pflanzmaschine mittels des Zugfahrzeugs entlang einer Pflanzstrecke bewegbar ist,
- einen Träger (13) zur Befestigung einer Pflanzeinheit (3) an der übrigen Pflanzmaschine,
- eine Pflanzeinheit (3) zum Setzen der Pflanze (1) in das Erdreich (2) sowie
- einen Aktor (4) zum Betrieb der Pflanzeinheit (3),
wobei die Pflanzeinheit (3) einen Pflanzspaten (5) und einen Niederhalter (6) umfasst,
wobei der Aktor (4) dazu geeignet ist, den Pflanzspaten (5) und den Niederhalter (6) sowohl unabhängig voneinander als auch die Pflanzeinheit (3) als Ganzes senkrecht zu einer Oberfläche (7) des Erdreichs (2) auf und ab zu bewegen,
wobei der Träger (13) mit der daran befestigten Pflanzeinheit (3) derart an der übrigen Pflanzmaschine angeordnet ist, dass die Pflanzeinheit (3) bei einem Betrieb der Pflanzmaschine oberhalb des Erdreichs (2) positioniert wird, sodass zumindest der Pflanzspaten (5) infolge einer abwärts gerichteten Bewegung in das Erdreich (2) eintaucht,
das Verfahren umfassend die folgenden Verfahrensschritte:
a) Die Pflanzeinheit (3) wird oberhalb einer mittelbar oder unmittelbar auf oder über dem Erdreich (2) positionierten Pflanze (1) positioniert;
b) Der Pflanzspaten (5) wird ausgehend von seiner oberen Endlage abwärts bewegt, wobei er die Pflanze (1) erfasst;
c) Der Pflanzspaten (5) wird weiter abwärts bewegt, wobei er in das Erdreich (2) eintaucht und im Zuge dessen Wurzeln (12) der Pflanze (1) in das Erdreich (2) drückt;
d) Der Niederhalter (6) wird gleichzeitig zur Bewegung des Pflanzspatens (5) oder nach der Bewegung des Pflanzspatens (5) ausgehend von seiner oberen Endlage (11) bis in eine untere Endlage (10) abwärts bewegt, bei deren Vorliegen der Niederhalter (6) in Kontakt mit einem Oberteil der Pflanze (1) steht, das oberhalb des Erdreichs (2) verbleibt;
e) Der Pflanzspaten (5) wird aufwärts bewegt und hierdurch aus dem Erdreich (2) heraus gezogen, wobei die Pflanze (1) mittels des in seiner unteren Endlage verbleibenden Niederhalters (6) niedergehalten wird, sodass die Wurzeln (12) trotz der Aufwärtsbewegung des Pflanzspatens (5) im Erdreich (2) verbleiben;
f) Sobald der Pflanzspaten (5) das Erdreich (2) verlassen hat, werden der Pflanzspaten (5) und der Niederhalter (6) in ihre jeweiligen oberen Endlagen (11) aufwärts bewegt.

10. Verfahren nach Anspruch 9, **dadurch gekennzeichnet, dass** die untere Endlage (10) des Pflanzspatens (5) und/oder die untere Endlage (10) des Niederhalters (6) relativ zu einer an der Pflanzmaschine befindlichen Referenzstelle oder relativ zu einer Oberfläche (7) des Erdreichs (2) eingestellt wird.

11. Verfahren nach Anspruch 9 oder 10, **dadurch gekennzeichnet, dass** der Niederhalter (6) so weit abwärts bewegt wird, bis er in Kontakt mit dem Oberteil (16) der Pflanze (1) tritt, wobei vorzugsweise der Niederhalter (6) mit einem Kontaktschalter zusammenwirkt, der bei Kontakt mit dem Oberteil (16) der Pflanze (1) ein elektrisches Signal abgibt, infolge dessen die Abwärtsbewegung des Niederhalters (6), vorzugsweise unverzüglich, gestoppt wird.

12. Verfahren nach einem der Ansprüche 9 bis 11, **dadurch gekennzeichnet, dass** das Erdreich (2) mit einer wasserdichten Abdeckung, insbesondere einer Folie, abgedeckt ist, wobei mindestens eine zu setzende Pflanze (1) auf der Folie aufliegt oder über dieser gehalten wird und wobei der Pflanzspaten (5) im Zuge seiner Abwärtsbewegung die Abdeckung durchstößt und ein Loch schafft, durch das hindurch der Pflanzspaten (5) die Wurzeln (12) der zu setzenden Pflanze (1) in das Erdreich (2) drückt.

13. Verfahren nach einem der Ansprüche 9 bis 12, **dadurch gekennzeichnet, dass** die Pflanzeinheit (3) bei Vorliegen sowohl des Pflanzspatens (5) als auch des Niederhalters (6) jeweils in deren oberen Endlagen (11) in einem Abstand vertikal oberhalb des Erdreichs (2) angeordnet ist, der eine vertikal zum Erdreich (2) gemessene Ausdehnung einer mittelbar oder unmittelbar auf oder über dem Erdreich (2) positionierten Pflanze (1) übersteigt, sodass die Pflanzeinheit (3) im Zuge einer Bewegung der Pflanzmaschine entlang einer Pflanzstrecke oberhalb der Pflanze (1) positioniert werden kann ohne mit dieser zu kollidieren.

14. Verfahren nach einem der Ansprüche 9 bis 13, **dadurch gekennzeichnet, dass** die Pflanze (1) bei Vorliegen in einer Position auf oder über dem Erdreich (2) so lange mittels einer Haltevorrichtung der Pflanzmaschine gehalten wird, bis sie von dem Pflanzspaten (5) zum Zweck der Einpflanzung in das Erdreich (2) erfasst wird.

15. Verfahren nach einem der Ansprüche 9 bis 14, **dadurch gekennzeichnet, dass** die Pflanzen (1) mittels einer Fördereinrichtung (20) ausgehend von einem Pflanzenvorrat zu dem Erdreich (2) bewegt werden, vorzugsweise bis in eine jeweilige Pflanzposition.

## Claims

1. A planting machine for planting bare-root plants (1) in soil (2), comprising
- a frame (23);
- a coupling for attaching the frame (23) to a towing vehicle such that the planting machine can be moved along a planting section by means of the towing vehicle,
- a support (13) for indirectly or directly attaching a planting unit (3) to the frame (23),
- a planting unit (3) for planting the plants (1) in the soil (2) and
- an actuator (4) for operating the planting unit (3),
wherein the planting unit (3) comprises a planting spade (5) and a hold-down device (6),
wherein the actuator (4) is designed to move the planting spade (5) and the hold-down device (6) independently of one another and/or the planting unit (3) as a whole up and down perpendicular to a surface (7) of the soil (2),
wherein the support (13) with the planting unit (3) attached thereto is arranged on the frame (23) in such a way that the planting unit (3) can be positioned above the soil (2) when the planting machine is in operation such that at least the planting spade (5) can plunge into the soil (2) as a result of a downward movement relative to the frame (23),
**characterized by**
a holding device, by means of which the at least one respective plant (1) can be held in position on or above the soil until the planting spade (5) grips it for the purpose of planting it in the soil (2).

2. The planting machine according to Claim 1, **characterized by** an upper limit switch (9) and a lower limit switch (8), wherein a lower end position (10) of at least the planting spade (5) can be set by means of the lower limit switch (8) and an upper end position (11) can be set by means of the upper limit switch (9), wherein the planting spade (5) can be moved up and down between the end positions (10, 11).

3. The planting machine according to one of the preceding claims, **characterized by** a gearbox (15), which interacts with the actuator (4), wherein the gearbox (15) is preferably designed to convert a rotary movement of the actuator (4) into a linear movement of the planting spade (5) and/or the hold-down device (6).

4. The planting machine according to one of the preceding claims, **characterized in that** the hold-down device (6) interacts with a contact switch (14), which is designed to determine contact of the hold-down device (6) with a plant (1) such that a downwards movement of the hold-down device (6) can be stopped when contact is determined.

5. The planting machine according to one of the preceding claims, **characterized in that** the planting unit (3) can be moved in a transverse direction relative to a direction of travel of the planting machine such that the planting unit (3) can be positioned relative to a plant (1) to be planted next as a function of an exact position of said plant, whereupon the planting unit (3) can interact with the plant (1) in the desired manner.

6. The planting machine according to Claim 5, **characterized by** at least one sensor (19), preferably in the form of an ultrasonic sensor, which is associated with the planting unit (3), wherein a position of a plant (1) to be planted next can be detected by means of the sensor (19).

7. Planting machine according to one of the preceding claims, **characterized by** a conveying device (20), by means of which plants (1) can be moved from a plant supply to the soil (2), preferably directly to a respectively provided planting position at which a respective plant (1) is to be planted in the soil (2).

8. The planting machine according to one of the preceding claims, **characterized in that** the holding device is designed in the form of a gripper arm or as part of a conveying device (20).

9. A method for planting a plant (1) by means of a planting machine, the planting machine comprising
- a frame (23);
- a coupling for attaching the frame (23) to a towing vehicle such that the planting machine can be moved along a planting section by means of the towing vehicle,
- a support (13) for attaching a planting unit (3) to the rest of the planting machine,
- a planting unit (3) for planting the plant (1) in the soil (2) and
- an actuator (4) for operating the planting unit (3),
wherein the planting unit (3) comprises a planting spade (5) and a hold-down device (6),
wherein the actuator (4) is designed to move the planting spade (5) and the hold-down device (6) both independently of one another and the planting unit (3) as a whole up and down perpendicular to a surface (7) of the soil (2),
wherein the support (13) with the planting unit (3) attached thereto is arranged on the rest of the planting machine in such a way that the planting unit (3) is positioned above the soil (2) when the planting machine is in operation such that at least the planting spade (5) plunges into the soil (2) as a result of a downward movement,
the method comprising the following method steps:
a) the planting unit (3) is positioned above a plant (1) positioned indirectly or directly on or above the soil (2);
b) the planting spade (5) is moved downwards from its upper end position, wherein it grips the plant (1);
c) the planting spade (5) is moved further downwards, wherein it plunges into the soil (2) and in the course of this presses the roots (12) of the plant (1) into the soil (2);
d) the hold-down device (6) is moved downwards from its upper end position (11) to a lower end position (10) at the same time as the movement of the planting spade (5) or after the movement of the planting spade (5), at which point the hold-down device (6) is in contact with an upper part of the plant (1) which remains above the soil (2);
e) the planting spade (5) is moved upwards and hereby pulled out of the soil (2), wherein the plant (1) is held down by means of the hold-down device (6) remaining in its lower end position such that the roots (12) remain in the soil (2) despite the upwards movement of the planting spade (5);
f) once the planting spade (5) has left the soil (2), the planting spade (5) and the hold-down device (6) are moved upwards to their respective upper end positions (11).

10. The method according to Claim 9, **characterized in that** the lower end position (10) of the planting spade (5) and/or the lower end position (10) of the hold-down device (6) is set relative to a reference point located on the planting machine or relative to a surface (7) of the soil (2).

11. The method according to Claim 9 or 10, **characterized in that** the hold-down device (6) is moved downwards until it comes into contact with the upper part (16) of the plant (1), wherein the hold-down device (6) preferably interacts with a contact switch, which emits an electrical signal when contact is made with the upper part (16) of the plant (1), as a result of which the downwards movement of the hold-down device (6) is stopped, preferably immediately.

12. The method according to one of Claims 9 to 11, **characterized in that** the soil (2) is covered by a waterproof cover, in particular a film, wherein at least one plant (1) to be planted rests on the film or is held via it and wherein the planting spade (5) penetrates the cover as it moves downwards and creates a hole, through which the planting spade (5) presses the roots (12) of the plant (1) to be planted into the soil (2).

13. The method according to one of Claims 9 to 12, **characterized in that** the planting unit (3) is arranged at a distance vertically above the soil (2) when both the planting spade (5) and the hold-down device (6) are present in their respective upper end positions (11), which distance exceeds an extension measured vertically to the soil (2) of a plant (1) positioned indirectly or directly on or above the soil (2) such that the planting unit (3) can be positioned above the plant (1) during a movement of the planting machine along a planting section without colliding with it.

14. The method according to one of Claims 9 to 13, **characterized in that** the plant (1), when present in a position on or above the soil (2), is held by means of a holding device of the planting machine until it is gripped by the planting spade (5) for the purpose of planting in the soil (2).

15. The method according to one of Claims 9 to 14, **characterized in that** the plants (1) are moved from a plant supply to the soil (2), preferably to a respective planting position, by means of a conveying device (20).

## Revendications

1. Planteuse destinée à planter des plantes à racines nues (1) dans le sol (2), comprenant :
- un cadre (23),
- un accouplement pour la fixation du cadre (23) sur un véhicule tracteur de telle manière que la planteuse peut être déplacée au moyen du véhicule tracteur le long d'une trajectoire de plantation,
- un support (13) pour la fixation directe ou indirecte d'une unité de plantation (3) sur le cadre (23),
- une unité de plantation (3) pour déposer les plantes (1) dans le sol (2), ainsi qu'
- un actionneur (4) pour actionner l'unité de plantation (3),
sachant que l'unité de plantation (3) comprend une bêche de plantation (5) et un support de maintien inférieur (6),
sachant que l'actionneur (4) est adapté pour déplacer vers le haut ou le bas la bêche de plantation (5) et le support de maintien inférieur (6) indépendamment l'un de l'autre et/ou l'unité de plantation (3) en tant qu'ensemble perpendiculairement à une surface (7) du sol (2),
sachant que le support (13) avec l'unité de plantation (3) fixée dessus est disposé sur le cadre (23) de telle sorte que l'unité de plantation (3) peut être positionnée lors d'un fonctionnement de la planteuse au-dessus du sol (2) de telle manière qu'au moins la bêche de plantation (5) peut plonger dans le sol (2) à la suite d'un mouvement dirigé vers le bas par rapport au cadre (23),
**caractérisée par**
un dispositif de maintien, au moyen duquel au moins une plante (1) respective peut être maintenue en position sur ou au-dessus du sol (2) jusqu'à ce qu'à ce que la bêche de plantation (5) la saisisse à des fins de plantation dans le sol (2).

2. Planteuse selon la revendication 1, **caractérisée par** un contacteur de fin de course supérieur (9) et un contacteur de fin de course inférieur (8), sachant qu'au moyen du contacteur de fin de course inférieur (8) une position finale inférieure (10) et au moyen du contacteur de fin de course supérieur (9) une position finale supérieure (11) au moins de la bêche de plantation (5) peuvent être réglées, sachant que la bêche de plantation (5) peut être déplacée vers le haut et vers le bas entre les positions finales (10, 11).

3. Planteuse selon l'une quelconque des revendications précédentes, **caractérisée par** un mécanisme (15), qui coopère avec l'actionneur (4), sachant de préférence que le mécanisme (15) est adapté pour convertir un mouvement de rotation de l'actionneur (4) en un mouvement linéaire de la bêche de plantation (5) et/ou du support de maintien inférieur (6).

4. Planteuse selon l'une quelconque des revendications précédentes, **caractérisée en ce que** le support de maintien inférieur (6) coopère avec un contacteur (14), qui est adapté pour constater un contact du support de maintien inférieur (6) avec une plante (1) de telle manière qu'à la constatation du contact, un mouvement de descente du support de maintien inférieur (6) peut être arrêté.

5. Planteuse selon l'une quelconque des revendications précédentes, **caractérisée en ce que** l'unité de plantation (3) peut être déplacée dans le sens transversal par rapport à un sens de la marche de la planteuse de telle manière que l'unité de plantation (3) peut être positionnée en fonction d'un positionnement précis d'une plante (1) à déposer en tant que suivante par rapport à celle-ci, à la suite de quoi l'unité de plantation (3) peut coopérer de la façon souhaitée avec la plante (1).

6. Planteuse selon la revendication 5, **caractérisée par** au moins un capteur (19), de préférence sous la forme d'un capteur à ultrasons, qui est attribué à l'unité de plantation (3), sachant qu'une position d'une plante (1) à déposer en tant que suivante peut être saisie au moyen du capteur (19).

7. Planteuse selon une quelconque des revendications précédentes, **caractérisée par** un dispositif de transport (20) au moyen duquel des plantes (1) peuvent être déplacées vers le sol (2) en partant d'une réserve de plantes, de préférence directement jusqu'à une position de plantation respectivement prévue, à laquelle une plante correspondante (1) doit être plantée dans le sol (2).

8. Planteuse selon l'une quelconque des revendications précédentes, **caractérisée en ce que** le dispositif de maintien est constitué sous la forme d'un bras préhenseur ou en tant que pièce d'un système de transport (20).

9. Procédé de dépose d'une plante (1) au moyen d'une planteuse, la planteuse comprenant :
- un cadre (23),
- un accouplement pour la fixation du cadre (23) sur un véhicule tracteur de telle manière que la planteuse peut être déplacée au moyen du véhicule tracteur le long d'une trajectoire de plantation,
- un support (13) pour la fixation directe ou indirecte d'une unité de plantation (3) sur le cadre,
- une unité de plantation (3) pour déposer les plantes (1) dans le sol (2), ainsi qu'
- un actionneur (4) pour actionner l'unité de plantation (3),
sachant que l'unité de plantation (3) comprend une bâche de plantation (5) et un support de maintien inférieur (6),
sachant que l'actionneur (4) est adapté pour déplacer vers le haut ou le bas la bêche de plantation (5) et le support de maintien inférieur (6) tant indépendamment l'un de l'autre qu'en tant qu'unité de plantation (3) en tant qu'ensemble perpendiculairement à une surface (7) du sol (2),
sachant que le support (13) avec l'unité de plantation (3) fixée dessus est disposé sur le reste de la planteuse de telle sorte que l'unité de plantation (3) peut être positionnée lors d'un fonctionnement de la planteuse au-dessus du sol (2) de telle manière qu'au moins la bêche de plantation (5) peut plonger dans le sol (2), à la suite d'un mouvement dirigé vers le bas, le procédé comprenant les étapes de procédé suivantes :
a) l'unité de plantation (3) est positionnée au-dessus d'une plante (1) positionnée directement ou indirectement sur ou au-dessus du sol (2),
b) la bêche de plantation (5) est déplacée vers le bas en partant de sa position finale supérieure, sachant qu'elle saisit la plante (1),
c) la bêche de plantation (5) continue d'être déplacée vers le bas, sachant qu'elle plonge dans le sol (2) et pousse au cours de cela les racines (12) de la plante (1) dans le sol (2),
d) le support de maintien inférieur (6) est simultanément déplacé vers le bas pour le mouvement de la bêche de plantation (5) ou après le mouvement de la bêche de plantation (5) en partant de sa position finale supérieure (11) jusqu'à une position finale inférieure (10), en présence de laquelle, le support de maintien inférieur (6) est en contact avec une partie supérieure de la plante (1), qui reste au-dessus du sol (2),
e) la bâche de plantation (5) est déplacé vers le bas et est de ce fait tiré hors du sol (2), sachant que la plante (1) est maintenue en bas au moyen du support de maintien inférieur (6) restant dans sa position finale inférieure de telle manière que les racines (12) restent dans le sol (2) malgré le mouvement de descente de la bêche de plantation (5), vers le bas
f) dès que la bêche de plantation (5) a quitté le sol (2), la bêche de plantation (5) et le support de maintien inférieur (6) sont déplacés en montée dans leurs positions finales supérieures (11) respectives.

10. Procédé selon la revendication 9, **caractérisé en ce que** la position finale inférieure (10) de la bêche de plantation (5) et/ou la position finale inférieure (10) du support de maintien inférieur (6) est réglée par rapport à une position de référence se trouvant sur la planteuse ou par rapport à une surface (7) du sol (2).

11. Procédé selon la revendication 9 ou 10, **caractérisé en ce que** le support de maintien inférieur (6) est déplacé vers le bas jusqu'à ce qu'il entre en contact avec la partie supérieure (16) de la plante (1), sachant de préférence que le support de maintien inférieur (6) coopère avec un contacteur qui délivre un signal électrique au contact avec la partie supérieure (16) de la plante (1) à la suite de quoi le mouvement de descente du support de maintien inférieur (6) est arrêté, de préférence immédiatement.

12. Procédé selon l'une quelconque des revendications 9 à 11, **caractérisé en ce que** le sol (2) est recouvert avec une couverture imperméable, en particulier une feuille,, sachant qu'au moins une plante (1) à poser repose sur la feuille ou est maintenue au-dessus de celle-ci et sachant que la bêche de plantation (5) transperce la couverture au cours de son mouvement de descente et crée un trou à travers lequel la bêche de plantation (5) pousse les racines (12) de la plante (1) à poser dans le sol (2).

13. Procédé selon l'une quelconque des revendications 9 à 12, **caractérisé en ce que** l'unité de plantation (3) en présence tant de la bêche de plantation (5) que du support de maintien inférieur (6) est disposée respectivement dans les positions finales supérieures (11) de ceux-ci à une distance verticalement au-dessus du sol (2), qui dépasse une extension mesurée verticalement par rapport au sol (2) d'une plante (1) positionnée directement ou indirectement sur ou au-dessus du sol (2) de telle manière que l'unité de plantation (3) peut être positionnée au cours d'un déplacement de la planteuse le long d'une trajectoire de plantation au-dessus de la plante (1) sans entrer en collision avec celle-ci.

14. Procédé selon l'une quelconque des revendications 9 à 13, **caractérisé en ce que** la plante (1) est maintenue au moyen d'un dispositif de maintien de la planteuse en présence dans une position sur ou au-dessus du sol (2) jusqu'à ce qu'elle soit saisie par la bêche de plantation (5) à des fins de plantation dans le sol (2).

15. Procédé selon l'une quelconque des revendications 9 à 14, **caractérisé en ce que** les plantes (1) sont déplacées vers le sol (2) au moyen d'un système de transport (20) en partant d'une réserve de plantes, de préférence jusqu'à une position de plantation correspondante.
